# EUROPEAN PATENT APPLICATION

(11) **EP 0 854 371 A1**
(43) Date of publication of application: **22.07.1998**
(21) Application number: 98300386.4
(22) Date of filing: 20.01.1998
(51) Int. Cl.: G02B 1/10, G21K 1/06

(54) **Specular surface body**

(30) Priority: 20.01.1997 JP 7139/97
(71) Applicant: Nippon Pillar Packing Co., Ltd., Senda-shi, Hyogo-ken (JP)
(72) Inventor: Tanino, Kichiya, Nippon Pillar Packing Co., Ltd., Senda-shi, Hyogo-ken (JP)
(74) Representative: Crump, Julian Richard John

(57) **Abstract**

The present invention intends to provide a specular surface body which has a sufficient resistance against irradiation of high energy beams such as X-rays, SOP beams, laser beams, etc., and can be suitably used as reflecting mirrors, diffraction gratings, etc. for such high energy beams.

The present invention relates to a specular surface body 1 in which the silicon carbide film 3 is formed by chemical vapor deposition on and covers the surface of the substrate 2 of the silicon carbide sintered material, and the film surface is processed to be a specular surface 3a. At the depth d within 300Å from the specular surface 3a of the silicon carbide film 3, a defect-free crystal layer 3b. The silicon carbide film 3 has a crystal structure strongly oriented to one crystal plane (for example, the (220) plane) specified by Miller indices in such a manner that its X-ray diffraction intensity ratio becomes 90% or more at the peak intensity.

## Description

The present invention relates to a specular surface body which may be used as a reflecting mirror, diffraction grating etc in optical device using mainly high-energy beams such as X-rays, synchrotron radiation beams (SOR beams), laser beams, etc, and more specifically, to a specular surface body in which the surface of a top layer made of silicon carbide is processed to be a specular surface.

As a conventional specular surface body of the above type, the one whose top layer is made of a chemically vapor deposited silicon carbide film (hereinafter called the "conventional specular surface body") is generally known. That is, the conventional specular surface body comprises a top layer made of the silicon carbide film as chemically vapor deposited (hereinafter called the "CVD-SiC film"), in which high-purity silicon carbide is chemically vapor deposited on the surface of a substrate made of a silicon carbide sintered material or carbon sintered material, wherein the film surface is processed to be a super smooth specular surface (surface roughness: RMS 10Å or less) by a mechanical specular surface processing method such as polishing, etc.

Now, as X-ray mirrors, etc, there are conventially mirrors in which the substrate made of copper, etc is specular surface polished, with gold being vapor-deposited thereon, or the ones in which a multilayer film of film thickness computed and designed on the basis of the wavelength as used is coated on the substrate to utilize interference effects. But these are primarily applied in the area of relatively small energy beams within long-wavelength region (for example, visible light and infra-red rays) and are apt to incur peeling-off of the coating layer, distortion of the specular surface, heat damages, etc when high-energy beams within short-wavelength region such as X-rays, etc are used, and it is extremely difficult to deal with these problems.

As against this, because the conventional specular surface body provides excellent optical properties in that the CVD-SiC film, which is the top layer forming the specular surface thereon, has superior physical properties such as heat resistance, heat conductivity, fastness, etc and exhibits an superior optical property or high reflecting against beams within the short-wavelength region, it does not have any problems as described above even when high-energy beams within the short-wavelength region are used and it is expected to be preferably used as an optical element such as a reflecting mirror, diffraction grating, etc for high-energy beams, such as X-rays, etc within the short-wavelength region.

However, when the conventional specular surface body is irradiated by high-energy beams such as X-rays, etc, the irradiated portion is likely to be damaged, posing a problem that resistance against irradiation of high-energy beams is not sufficient.

That is, irradiating the high-energy beams such as X-rays, etc allows the irradiated portion in the specular surface to assume an appearance of fine foams and to look as if the irradiated portion was instantaneously melted, and generates visible white turbidity (cloudiness). If this kind of damage occurs on the specular surface, the beam reflectivity inevitably decreases, and it is unable to properly exert any functions as required of optical elements such as reflecting mirrors, diffraction gratings, etc. In addition, because at the damaged portion, the absorption rate of high-energy beam increases, in an extreme case, breakage of the specular surface body itself may result. At the white turbidity portion, silicon is deposited in the form taking an appearance of fine liquid drops, indicating that white turbidity is caused by deposition of silicon.

Therefore, the present inventor conducted various experiments for finding out causes of lack of resistance against irradiation of high-energy beam in the conventional specular surface body (in particular, causes of occurrence of damage due to beam irradiation), and reached a conclusion that it primarily results from absence of the defect-free crystal layer of silicon carbide within a certain range of depth in the top layer of the specular surface body.

That is, in the conventional specular surface body, as described above, the specular surface with surface roughness of RMS 10Å or lower is obtained by a mechanical surface polishing method (a specular surface processing method) such as polishing, etc, but such mechanical surface polishing method utilizes, for instance, continuous formation of microcracks, and it has been confirmed that the physical impact (hereinafter called the "physical processing force") for scraping away the crystals forming irregularities on the CVD-SiC film surface causes to greatly disturb the atomic arrangement on the specular surface processed surface and in the portions immediately under the surface, thereby forming a layer whose quality is changed by the machining processing (hereinafter referred to as "the quality changed layer") accompanied by a processing strain and/or crystalline dislocation, etc. And it has been clarified that existence of such quality changed layer results in lowering of resistance against beam irradiation and causes to generate damage by beam irradiation. For example, when high-energy beams are irradiated to the portion where the regularity of atomic arrangement is destroyed, that is, when the energy high enough to promote rearrangement of atoms is supplied, an excessive silicon is deposited outside the lattice of silicon carbide in the process for rearranging atoms with the result that white turbidity occurs.

On the other hand, the generation of the quality changed layer cannot be avoided by the electrical or chemical surface polishing method either, which does not need the physical processing force, but it is assumed that it is possible to reduce the depth or thickness of the quality changed layer as compared to the case of mechanical surface polishing method that requires the physical processing force. Therefore, experiments were carried out using CVD-SiC film coating materials having the defective crystal layers (the quality changed layer) caused by processing strain, etc which are different in depth. The results of the experiments indicated that even if the defective crystal layer is formed in the surface of the CVD-SiC film, no damages due to the beam irradiation occur if the depth of the defective crystal layer is less than a specified level and the defect-free crystal of silicon carbide exists in the range of a specified depth from the film surface. Specifically, even if the quality changed layer or defective crystal layer exists, damages such as formation of the white turbidity do not occur even when high-energy beams such as X-ray, etc are irradiated, if the defective crystal layer is extremely shallow and the defect-free crystal layer of silicon carbide exists at the depth within 300Å from the specular surface.

The present invention is made on the basis of the conclusion obtained by the findings of these experiments, and it is an object of the present invention to provide a specular surface body which possesses sufficient resistance against irradiation of high-energy beams, such as X-rays, SOR beams, laser beams, etc and can be suitably used as a reflecting mirror, diffraction gratings, etc for high-energy beams.

The specular surface body according to the present invention for solving this problem is obtained by processing a surface of the top layer made of silicon carbide to form a specular surface, and in particular, the top layer has a defect-free crystal layer of silicon carbide at the depth within 300Å from the specular surface of the top layer. In other words, the depth (thickness of this layer including the specular surface) of the layer whose quality was changed by the processing (i.e the quality changed layer) or the machining defective crystal layer caused by the specular surface processing is less than 300Å. The specular surface referred to here in the present invention means the super smooth surface of surface roughness RMS less than 10Å. However, the shape of the specular surface (plane, spherical, nonspherical, should be optional in accordance with applications of the present specular surface body.

For the specular surface body according to the present invention, the whole body can be made of a single-crystal structural material of silicon carbide, but in general, it is desirable to make the specular surface body of a composite material in which the silicon carbide film is formed on the surface of a substrate by chemical vapor deposition. That is, it is desirable to form the top layer (to be processed to form the specular surface thereon) with CVD-SiC film. In this event, the CVD-SiC film preferably has a crystal structure which is strongly oriented to one crystal plane specified by Miller indices in such a manner that the X-ray diffraction intensity ratio of the crystal plane becomes 90% or more at peak intensity. Now, strictly speaking, the X-ray diffraction intensity ratio of "one crystal plane specified by Miller indices", that is to say, "one crystal plane to which the crystal is to be oriented" (hereinafter referred to as "the plane to be oriented to") means a ratio of the peak intensity of "the plane to be oriented to" to the total of the peak intensity in all the crystal planes ((111) plane, (220) plane, (311) plane etc) including "the plane to be oriented to" wherein the peak intensity (subjected to correction by the powder X-ray diffraction value based on the US ATM Standard) is measured by the X-ray diffraction equipment. The degree of orientation of the crystal plane is the highest at the (111) plane, which is followed by the (220) plane. Therefore, if the plane to be oriented to is a crystal plane other than the (111) plane (for example, the (220) plane), in practicality, a ratio of the peak intensity of "the plane to be oriented to" to the total peak intensity of "the plane to be oriented to" and the (111) plane is regarded as the X-ray diffraction intensity ratio of the present "the plane to be oriented to". If "the plane to be oriented to" is the (111) plane to, a ratio of the peak intensity of the (111) plane to the total peak intensity of "the plane to be oriented to" and (220) plane is regarded as its X-ray diffraction intensity ratio. In this manner, the degree of orientation can be specified. Consequently, for example, if "the plane to be oriented to" is the (220) plane, etc, other than the (111) plane and its X-ray diffraction intensity ratio is 90%, the X-ray diffraction intensity ratio of the (111) plane should be 10%. If the plane to be oriented to" is the (111) plane and its X-ray diffraction intensity ratio is 90%, the X-ray diffraction intensity ratio of the (220) plane should be 10%.

Following is a description by way of example only with reference to the accompanying drawings of embodiments of the present invention.

In the drawings:-
Figure 1 is a longitudinal cross sectional drawing of a main portion showing one example of the specular surface body according to the present invention; and
Figure 2 is a schematic drawing showing one example of the specular surface processing machine.

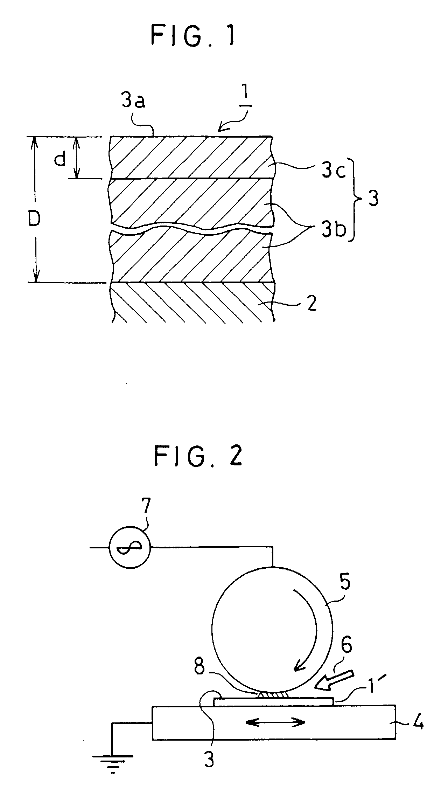

The specular surface body 1 is in this embodiment is obtained by processing the surface of the silicon carbide film (CVD-SiC film) 3 formed by chemical vapor deposition on and covering the surface of the substrate 2 as shown in figure 1 to form the specular surface 3a which is the super smooth surface of surface roughness RMS 10Å or less, wherein a defect-free crystal layer 3b exists at depth d within 300Å from the specular surface 3a in the CVD-SiC film 3.

This specular surface body 1 is produced by the following processes.

First of all, the substrate 2 is formed in a desired shape (for example desired shape determined in accordance with the shape of a desired optical element such as reflecting mirror, diffraction gratings, etc) in accordance with applications of the specular surface body 1.

The component material of the substrate 2 is determined in consideration of purposes of use, use conditions, strength of adhesion with the CVD-SiC film 3, etc, but in general, with influence of impurities evaporated from the substrate 2 during vapor deposition on purity of the CVD-SiC film 3 taken into account, the sintered materials of silicon carbide or carbon, etc of purity as high as possible are best suited. In order to allow the intrinsic properties of the CVD-SiC film to be exhibited at its maximum, it is desirable to use sintered materials of α silicon carbide or β silicon carbide of high density of theoretical density of 90% or higher, and it is desirable to set the surface roughness of the substrate 2 at RMS 1000Å or lower. If the substrate density is low, it is impossible to sufficiently secure mechanical strength etc generally required in the specular surface body such as X-ray mirror etc, and in particular, when the substrate 2 is made of porous sintered materials, air in the substrate clearance expanded due to temperature rise caused by beam irradiation etc, tends to generate cracks or heat strain. And further, if the specular surface body 1 is cooled, a coolant such as cooling water tends to enter the inside of the substrate, thus forming cracks, etc due to evaporation and expansion of the intruding water. Consequently, in order to sufficiently secure strength of the substrate, and eventually strength of the specular surface body, it is desirable to maintain density of the substrate as high as possible. Needless to say, although strength of adhesion of the CVD-SiC film 3 to the substrate 2, orientation to a specific crystal plane etc should also be taken into account, generally speaking, density of the substrate is higher, the better and there is no particular upper limit. For example, in order to strongly orient the crystal to a specific crystal plane ("the plane to be oriented to"), it is naturally necessary to strictly control the conditions of vapor deposition of the film but in addition to this, the surface on which the film is to be formed, that is, the surface form of the substrate 2 is also important, and when the substrate 2 is porous where voids exist in a great number as is the case of the sintered material of carbon, there is a limit to the orientation of the crystal plane and it is difficult to form highly oriented film mentioned above. Consequently, from the viewpoint of this crystal orientation, it is desirable to hold density of the substrate 2 made of the sintered materials at 93% or higher.

Now, the CVD-SiC film 3 is formed on and covers the surface of the substrate 2 and thus a specular surface body material 1' (see figure 2) is obtained.

The CVD-SiC film 3 must have a defect-free crystal construction of high-purity and high density in which the crystal is strongly oriented to "the plane to be oriented to" as specified at one's option such that its X-ray diffraction intensity is 90% or higher, and such CVD-SiC film 3 is formed by, for example, the following technique. This example relates to the case in which the (220) plane is selected as "the plane to be oriented to" and the crystal is strongly oriented to the (220) plane so that its X-ray diffraction intensity ratio becomes 90% (X-ray diffraction intensity ratio of the (111) plane is 10%) in the present CVD-SiC film 3.

First of all, the substrate 2 is placed in a suitable CVD furnace, air is exhausted from the exhaust port of the CVD furnace by a vacuum pump, and inside of the CVD furnace is maintained in the reduced pressure atmosphere. And under the condition of such reduced pressure atmosphere, the substrate 2 is heated and held at the given temperature, and then, a predetermined reaction gas is continuously fed to the inside of the CVD furnace.

At this point, exhaust process is carried out continuously without stopping, and the inside of the CVD furnace is held in the specified reduced pressure atmosphere. Normally, it is desirable to hold it at 200 Torr or lower. However, for the economical reason with the vacuum pump capacity, etc taken into account, it is desirable to hold it at 0.1 - 200 Torr. Further, it is desirable to heat and hold the substrate 2 at 1400-1500°C. As the reaction gas, for example, a mixture gas of monomethyltrichlorosilan and hydrogen of a specified equivalent ratio (in general, about 20 equivalent ratio) is used. When the reaction gas is fed, the CVD-SiC film is formed on the surface of substrate 2, that is, inner and/or outer circumferential surfaces of the substrate 2 by the reaction of CH₃SiCl₃ + H₂ → SiC + 3HCl.

By the way, the formation of the CVD-SiC film 3 is, in general, carried out by the atmospheric pressure CVD method in which the reaction gas is fed to the inside of the CVD furnace held at the atmospheric pressure. However, with this atmospheric pressure CVD method, it is difficult to obtain high-purity CVD-SiC film 3. That is, in the atmospheric pressure CVD method, it is impossible to prevent diffusion of impurities contained in the substrate when the substrate purity is low, or even if the substrate purity is high, pollutant particles are scattered from the CVD furnace wall surface and are deposited on the substrate surface on which the CVD-SiC film 3 is to be formed and its surrounding areas, and is mixed in the CVD-SiC film 3.

As the film forming method, in addition to the atmospheric pressure CVD method, there is an intermittent CVD method in which exhaust and reaction gas supply are repeated alternately in a specified cycle. According to this intermittent CVD method, the said pollutant particles are discharged to some extent at the time of exhaust, and increasing in the purity of the CVD-SiC film 3 is expected. However, it is not that the pollutant particles, etc are completely discharged in the exhaust process, but it is likely that the pollutant particles may remain at the start of the reacting gas supply process. Hence, it is difficult to secure the high-purity of the film according to the intermittent CVD method as in the case of the atmospheric pressure CVD method.

As explained above, according to the generally adopted CVD methods, the impurities are deposited on and are not removed from the substrate surface or the surrounding areas. Hence, whatever improvements may be made in the vapor deposition conditions, impurities such as a large volume of Fe, etc or pollutants such as excessive Si out of the equivalent ratio of SiC are contained in the CVD-SiC film 3, and it is difficult to obtain the high-purity CVD-SiC film 3. However, as described above, if the inside of the CVD furnace is maintained in the reduced pressure atmosphere and exhaust is continuously carried out even during supplying the reaction gas, an exhaust stream flowing in the direction of the exhaust port is formed on the surface of the substrate 2 on which the CVD-SiC film 3 is to be formed, and its surrounding area and in cooperation with the migration of impurities to the surface, the surface and the surrounding areas of the substrate 2 are held clean. That is, impurities such as pollutant particles adhering to the CVD furnace wall surface, reaction gas residue, etc are discharged quickly to the outside of the CVD furnace by the exhaust stream, thereby holding the inside of the CVD furnace clean. As a result, on the surface of the substrate 2, the high-purity CVD-SiC film 3 is formed. By the way, the reaction gas may be supplied not continuously but intermittently, but it is desirable to continuously carry out the exhaust irrespective of supply or stop of supply of the reaction gas. The film thickness (film thickness existing after the specular surface processing) D of the CVD-SiC film 3 can be set suitably in accordance with the conditions, for instance, of use of the specular surface body such as a laser reflecting mirror made of the present component material on the condition that the strength of adhesion with the substrate 2 etc is sufficient. In general, it is preferable to set the thickness at 50 - 200µm. If the film thickness is below 50µm, defects caused by penetrating holes are expected, considering variation (±20µm) in the film thickness and problems occur in regard to irradiation of X-rays, etc Conversely, if the film thickness exceeds 200µm, a sufficient smoothness cannot be obtained due to enlargement of the crystal, and it takes time to form the fi.lm, resulting in high costs.

If the CVD-SiC film whose film thickness existing after the specular surface processing exceeds 200µm is formed, because the film forming temperature is extremely high, the residual stress is generated in the film after film forming (after cooling) due to a difference between the substrate and the film in regard to thermal expansion generated during film forming. As a result, when the film surface is specular surface processed, it is difficult to obtain the desired specular surface shape.

For example, when the specular surface is processed in the plane form, it is likely that the specular surface may become in the concave or convex shape under the influence of residual stress existing in the film. In view of this point also, the film thickness D should not exceed 200µm

In addition, the surface of the CVD-SiC film 3 of the specular surface body material 1' is specular surface processed in a desired shape (plane, sphere, non-sphere, etc) in accordance with the applications, etc of the specular surface body 1. As the specular surface processing method, adopted is the method which can satisfy the conditions that "① specular surface 3a of surface roughness RMS 10Å or less can be obtained" and "② in the CVD-SiC film 3 after the specular surface processing, the defect-free crystal layer 3b should exist at the depth d within 300Å from the specular surface 3a, that is, the depth d of the quality changed layer or the defective crystal layer 3c generated by the specular surface processing is less than 300Å". Specifically, the plasma CVM (Chemical Vaporization Machining) method which is a specular surface processing method that does not need the physical processing force, EEM (Elastic Emission Machining) method, etc are used independently or in combination. The plasma CVM method is a specular surface processing method to be described later, and the EEM method is a specular surface processing method which utilizes a principle that when two types of solids are brought into contact, interacting forces (joining forces) are generated at the interface as formed and when they are separated, one solid surface atom removes the other solid surface atom. The EEM method supplies micro particles smaller than submicrons to the surface to be processed under no load conditions and removes layer by layer atoms of the surface to be processed by agitating these micro particles.

Now, the specular surface processing method that satisfies conditions of ①, ② is specifically explained with the plasma CVM method taken as an example.

The specular surface processing machine for implementing the plasma CVM method comprises a horizontally movable stage 4 and a spherical electrode 5 rotatably provided on the stage 4 arranged in a clean room as shown in figure 2. And, in carrying out specular surface processing by the plasma CVM method, first of all, the specular surface body material 1' obtained as described above is placed on the stage 4 with the CVD-SiC film 3 positioned close to the electrode 5. The clean room is held in the high-pressure atmosphere (preferably higher than 700 Torr, and more suitably, 700 - 750 Torr) and the reaction gas with the high electro negativity (for example, a halogen based gas such as argon, helium, etc containing about 0.1 - 5% sulfur hexafluoride (SF₆)) is circulated and supplied between the electrode 5 and the CVD-SiC film 3. With the electrode 5 rotated at high speed in a specified direction, using the high-frequency power supply (in general, about 150 MeHz) 7, high-frequency plasma 8 is generated between the electrode 5 and the CVD-SiC film 3 such that the atom with large electro negativity such as halogen, etc is excited in the high-frequency plasma 8 existing locally (in terms of space) in the high-pressure atmosphere and becomes neutral radical with higher reactivity. As a result, the excited neutral radical with high reactivity acts on the CVD-SiC film 3, changes the atom on the film surface to the evaporative substance, and removes the same. In addition, by allowing the stage 4 to make a horizontal movement, such removal action is extended to the whole film surface. In this way, because the removal reaction acting on the atom takes place chemically, from the geometrical point of view, the film surface is processed to be the super smooth surface on the order of atom, and the excellent processed surface free of disturbance from the crystallographic viewpoint is obtained. Consequently, formation of the quality changed layer or defective crystal layer 3c which accompanies the specular surface processing can be avoided as much as possible, and with the defect-free crystal layer 3b existing at the depth d within 300Å from the specular surface 3a, the CVD-SiC film 3 surface can be processed to have the specular surface 3a of surface roughness RMS 10Å or less.

By the way, when silicon carbide is chemically vapor deposited under normal film forming conditions, the crystal faces of the CVD-SiC film are non-oriented or tend to be weakly oriented to the (111) plane, but the atom density, etc on each crystal plane is not identical. For example, the (111) plane has extremely high atom density as compared to other orientation, and the chemical activity of the surface is extremely low. Consequently, in this non-oriented or weakly oriented CVD-SiC film, the above-mentioned removal reactions do not take place uniformly due to a difference of crystal orientation, and it is not at all easy to process the surface to be a super smooth surface of surface roughness RMS 10Å or less, and the depth of the quality changed layer or defective crystal layer 3c (thickness of layer 3c including the specular surface 3a) tends to be great. However, as described above, strongly orienting the CVD-SiC film 3 to one crystal plane ("the plane to be oriented to") enables uniform removal reaction by neutral radicals to take place, and does not give rise to such problem. However, this advantage is not markedly exhibited when the degree of orientation is low (when the X-ray diffraction intensity ratio of "the plane to be oriented to" is below 90% at the peak intensity). Consequently, in addition to properly selecting the surface processing method, strongly orienting the CVD-SiC film 3 to "the plane to be oriented to" (specified oriented plane) in forming the top layer of the specular surface body 1 with the CVD-SiC film 3 is extremely important for processing the specular surface body 1 which has the specular surface 3a having the surface roughness less than RMS 10Å and which has the defect free crystal layer 3b at the depth d within 300Å from the specular surface 3a. The specular surface 3a is further processed if required. For example, when the specular surface body 1 is used as diffraction gratings, processing (etching, etc) is carried out for forming specified diffraction groove on the specular surface 3a.

The specular surface 3a of the specular surface body 1 obtained as described above is not damaged even when X-rays, SOR beams, laser beams, and other high-energy beams are irradiated, as proved in the embodiment to be discussed later. Further, it has a greatly increased resistance against beam irradiation as compared to the conventional specular surface bodies and can be suitably used as a reflecting mirror, diffraction gratings, etc for X-rays, SOR beams, laser beams, etc.

It is to be understood that the present invention is not limited to the embodiment above described, but it can be suitably improved and modified in the range that does not depart from the basic principle of the present invention. For example, the specular surface body 1 may be of a composite structure whose top layer is made of the CVD-SiC film 3 as described above, and in addition, it is also possible to form the whole body including the top layer with a single crystal structure of silicon carbide. As the specular surface processing method, any method that satisfies the conditions ①, ② is acceptable, and shall not be particularly limited.

For Embodiment 1, the high-purity silicon carbide powder (particle size: less than 1µm) was molded without using a binder and sintered, and the substrate, which is a silicon carbide sintered material of 100mm in diameter, 10mm thick, and 95% in density was produced. And the substrate was placed in the CVD furnace, and while the substrate was heated and held at 1500°C, monomethyltrichlorosilan and hydrogen of 20 equivalent ratio were continuously fed into the CVD furnace. During this period, exhaust is continuously carried out with a vacuum pump connected to the exhaust port of the CVD furnace, and the inside of the furnace was held in the reduced pressure atmosphere of 50 Torr. And a specular surface body material with the CVD-SiC film (β-SiC (3C)) of 120µm film thickness and 520nm spectral absorption end was obtained. In this CVD-SiC film, an excessive Si being out of the chemical equivalent ratio scarcely exists, and heavy metal elements contained in the film were in extremely small amounts (Fe: 30ppb, Cu: 50ppb or less, Cr: 40ppb or less). And the crystal faces of the CVD-SiC film are strongly oriented to the (220) plane (X-ray diffraction intensity ratio of the (220) plane is 90%).

The specular surface body material obtained in this way was subjected to the specular surface processing by the above-mentioned plasma CVM method using the specular surface processing machine shown in figure 2 and the CVD-SiC film surface was processed to form a specular surface of surface roughness RMS 10Å or less under the conditions of clean room pressure: 750 Torr (1 atm); high-frequency power supply: 150 MeHz; reaction gas: argon gas containing SF₆ of 1%; electrode: alumina sphere; and electrode rotating speed: 1500rpm. As a result, the specular surface body 1₁ according to this invention was obtained.

For Embodiment 2, the specular surface body material identical to the one used in Embodiment 1 was obtained, and the CVD-SiC film surface was specular surface processed by the plasma CVM method under the conditions of same as Embodiment 1 except that the electrode rotation speed of Embodiment 2 was 3000rpm. As a result, the specular surface body 1₂ according to this invention was obtained.

For Embodiment 3, the specular surface body material identical to the one used in Embodiment 1 was obtained, and the CVD-SiC film surface was specular surface processed by the plasma CVM method under the conditions completely identical to those in Embodiment 1 except that the electrode rotation speed of Embodiment 3 was 3600rpm. As a result, the specular surface body 1₃ according to this invention was obtained.

And for Comparative Example 1, after obtaining the specular surface body material identical to the one used in Embodiment 1, the CVD-SiC film surface was specular surface processed by a mechanical surface processing method, and the specular surface body l₄ corresponding to the conventional specular surface body was obtained. That is, the film surface was specular surface processed by using the liquid-form abrasive material with abrasive grains dispersed in the colloidal form. While the abrasive material is allowed to drip to a cast iron made rotary panel, the rotary panel and the film surface of the specular surface body material placed on the rotary panel are allowed to make a relative movement in the horizontal direction with the abrasive material interposed therebetween. That is to say, while the rotary panel is rotated at 20 - 50rpm, the specular surface body material is moved back and forth in the radial direction on the rotary panel.

For Comparative Example 2, after obtaining the specular surface body material identical to the one used in Embodiment 1, the CVD-SiC film surface was specular surface processed by a mechanical surface processing method different from that of Comparative Example 1, and the specular surface body 1₅ corresponding to the conventional specular surface body was obtained. That is, after the CVD-SiC film surface was roughly processed by diamond abrasive grains, it is further precision-polished with diamond abrasive grains for specular surface processing the film surface.

With respect to each of the specular surface bodies 1₁, 1₂, 1₃, 1₄, 1₅, obtained as described above, the distance d from the specular surface (i.e. the processed surface) to the portion where defect-free crystal layer exists (that is, depth to the defect-free crystal layer) was measured by atomic force microscope (AFM). This measurement was carried out at any 5 points ① - ⑤, and the mean values of 5 points were obtained. The root mean square roughness (Å) in the specular surfaces of each specular surface body 1₁, 1₂, 1₃, 1₄ 1₅ was measured.

The results are shown in Table 1, and with respect to the specular surface bodies 1₁, 1₂, 1₃ of the embodiments, in all of them, the depth d to the defect-free crystal layer at each measuring point ① - ⑤, and their mean values were 300Å or less. On the contrary, with respect to the specular surface bodies 1₄, 1₅ of the comparisons, in all of them, the depth d to the defect-free crystal layer at each measuring point ① - ⑤ and their mean values greatly exceeded 300Å. With respect to the surface smoothness of the specular surface, in all of the specular surface bodies 1₁, 1₂, 1₃, 1₄, 1₅ it was 10Å or less, which permits the specular surface bodies to be used as X-ray mirrors, etc.

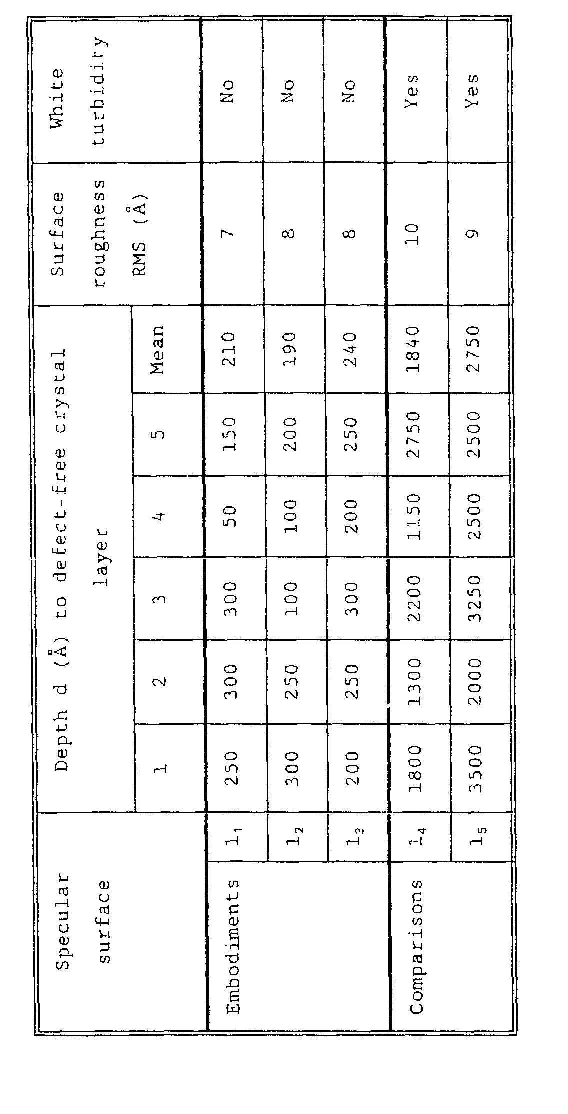

In order to confirm resistance against irradiation of high-energy beam, each one of the specular surface bodies 1₁, 1₂, 1₃, 1₄, 1₅ was used in the Argon Excimer Laser Resonator Reflecting Mirror, and the Argon Excimer Laser was irradiated (1 pulse) in which the intensity inside the resonator is 2 MW and time of 1 pulse is 5ns. The laser irradiated portion was observed visually and by Nomarski differential-interference microscope.

As a result, with respect to the specular surface bodies 1₄, 1₅ of Comparisons, apparent turbidity was recognised even visually at the laser irradiated portion. Nomarski differential-interference microscope revealed an apparent damage at the laser irradiated portion. That is, it has been confirmed that the laser irradiated portion has changed and assumed an appearance of fine foams, and looks as if the portion was melted instantly.

On the other hand, with respect to the specular surface bodies 1₁, 1₂, 1₃, of Embodiments, no white turbidity was observed visually in the laser irradiated portion. Nomarski differential-interference microscope also revealed that the damage as described above was not inflicted on the irradiated portion at all.

When the irradiation by the argon excimer laser was repeated 10 times, the specular surface bodies 1₄ 1₅ of Comparisons were broken. But, no breakage occurred in specular surface bodies 1₁, 1₂, 1₃ of Embodiments. Silicon was deposited locally in embodiments, but no white turbidity that could be visually recognised was formed.

Based on this, it is clear that the specular surface body according to the present invention in which defect-free crystal layer exists at the depth within 300Å from the specular surface, resistance against beam irradiation is greatly improved as compared to the conventional specular surface body, and it has been confirmed that it can be used as an X-ray mirror, etc for high-energy beams.

As easily understood from the above explanation, resistance of the specular surface body of this invention against beam irradiation has been greatly improved, and can be suitably applied as reflecting mirrors, diffraction gratings, etc for high-energy beams such as X-rays, SOR beams, laser beams, and has greatly increased its practical value.

## Claims

1. A specular surface body having a silicon carbide top layer wherein a surface of the top layer has been processed to be a specular surface wherein a defect free crystal layer of silicon carbide exists at the depth within 300Å from the specular surface.

2. A specular surface body according to claim 1, wherein the top layer is composed of a chemically vapor deposited silicon carbide film and the silicon carbide film has a crystal structure strongly oriented to one crystal plane represented by specific Miller indices in such a manner that the X-ray diffraction intensity ratio of the crystal plane becomes 90% or more at peak intensity.

3. A specular surface body according to claim 2, wherein the crystal plane specified by Miller indices is the (220) plane.

4. A specular surface body according to claim 2, wherein a high density α silicon carbide or β silicon carbide sintered material of theoretical density of 90% or higher is used as a substrate on which the silicon carbide film is chemically vapor deposited.

5. A specular surface body according to claim 2, wherein the film thickness of the silicon carbide film existing after the film has been processed to form the specular surface thereon is 50 - 200µm.

6. A specular surface body according to claim 1 or claim 2, wherein the surface of the top layer is processed to be a specular surface of surface roughness RMS 10Å or less.
